# EUROPEAN PATENT APPLICATION

(11) **EP 4 539 227 A1**
(43) Date of publication of application: **16.04.2025**
(21) Application number: 23843357.7
(22) Date of filing: 19.07.2023
(51) Int. Cl.: H01M 50/24, H01M 50/186, H01M 50/383, H01M 50/502, H01M 10/655, H01M 50/141

(54) **BATTERY PACK AND DEVICE INCLUDING THE SAME**

(30) Priority: 20.07.2022 KR 20220089851; 20.07.2022 KR 20220089853; 11.07.2023 KR 20230090086
(71) Applicant: LG Energy Solution, Ltd., Seoul 07335 (KR)
(72) Inventor: PARK, Jin Yong, Daejeon 34122 (KR); KIM, Seung Joon, Daejeon 34122 (KR); KWON, Wooyong, Daejeon 34122 (KR); KIM, Insoo, Daejeon 34122 (KR); SHIN, Song Ju, Daejeon 34122 (KR); CHI, Ho June, Daejeon 34122 (KR); JUNG, Seyun, Daejeon 34122 (KR); LEE, Myungwoo, Daejeon 34122 (KR)
(74) Representative: Plasseraud IP
(86) International application number: PCT/KR2023/010380
(87) International publication number: WO 2024/019511

(57) **Abstract**

A battery pack according to an embodiment of the present disclosure includes a plurality of battery cells stacked in one direction, a pack case that houses the battery cells in an inner space thereof, a cell cover that at least partially surrounds at least a part of the plurality of battery cells in the inner space of the pack case, a busbar assembly that electrically connects the plurality of battery cells, a first sealing member mounted to the busbar assembly and a second sealing member mounted to the cell cover.

## Description

### [TECHNICAL FIELD]

### Cross Citation with Related Application(s)

This application claims priority benefit of Korean Patent Application No. 10-2022-0089851, filed on July 20, 2022, Korean Patent Application No. 10-2022-0089853, filed on July 20, 2022, and Korean Patent Application No. 10-2023-0090086, filed on July 11, 2023, the contents of each of which are incorporated herein by reference in their entireties.

The present disclosure relates to a battery pack and a device including the same, and more particularly, a battery pack improved in energy density and cooling performance and enhanced in safety, and a device including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, being freely charged and discharged, and having very low self-discharge rate and high energy density.

Such a lithium secondary battery comprises an electrode assembly in which a cathode plate and an anode plate, each being coated with the cathode active material and the anode active material, are arranged with a separator being interposed between them, and an exterior cladding material, i.e., a battery case, that seals and houses the electrode assembly together with the electrolyte.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior material.

Recently, battery packs have been widely used for driving or energy storage in middle or large-sized devices such as electric vehicles or energy storage systems. A conventional battery pack includes one or more battery modules inside a pack case and a control unit such as a BMS (battery management system) that controls the charging and discharging of a battery pack. Here, the battery module is configured to include a large number of battery cells inside a module case. That is, in the case of a conventional battery pack, a large number of battery cells (secondary batteries) are housed inside a module case to configure each battery module, and one or more of such battery modules are housed inside a pack case to configure a battery pack.

In particular, a pouch-type battery has advantages in various aspects, such as light weight and small dead space during stacking, but has problems that it is vulnerable to external impact, and the assembly property is slightly reduced. Therefore, it is common to manufacture a battery pack by first modularizing a large number of cells and then housing them in a pack case. As a representative example, a conventional battery pack is configured by first housing a large number of battery cells inside a module case to configure a battery module, and then housing one or more of such battery modules inside the pack case. Moreover, a conventional battery module often stacks a large number of battery cells by using various components, such as stacking frames made of plastic material (also called cartridges), both end plates in the cell stacking direction, and fastening members such as bolts as disclosed in the following prior art literature (Korean Unexamined Patent Publication No. 10-2015-0044599), and the like. And, the stack formed in this way is often housed in the inside of a module case again to be modularized.

However, such a conventional battery packs may be disadvantageous in terms of energy density. Typically, in the process of housing a large number of battery cells in a module case and modulating them, due to various components such as module cases and stacking frames, the volume of the battery pack may unnecessarily increase or the space occupied by the battery cells may decrease. Moreover, in addition to the space occupied by the components themselves such as the module case and the stacking frame, the housing space for the battery cells can be reduced in order to ensure assembly tolerances for such components. Therefore, conventional battery packs may have limitations in increasing energy density.

Further, conventional battery packs may be disadvantageous in terms of the assembly property. In particular, in order to manufacture a battery pack, it passes through a process of first modularizing a large number of battery cells to configure a battery module, and then housing the battery module in a pack case, which causes a problem that the manufacturing process of the battery pack becomes complicated. Moreover, as disclosed in the above prior art literature, the process and structure of forming a cell stack using stacking frames, bolts, plates, and the like may be very complicated.

Further, in the case of a conventional battery pack, the module case is housed inside the pack case, and the battery cells are housed inside the module case, which also causes a problem that it is difficult to secure excellent cooling performance. In particular, if the heat of the battery cells housed in the module case is discharged to the outside of the pack case through the module case, the cooling efficiency may decrease, and the cooling structure may also become complicated.

In addition, the conventional battery pack does not include a separate sealing member, and further, a separate sealing member is not included even in the battery cells and battery modules, which causes a problem that moisture, dust or the like easily flows in from the outside. In this case, since the waterproof level is not satisfied, there is a growing need to solve the above problems.

### [Prior Art Literature]

(Patent Literature 1) Korean Unexamined Patent Publication No. 10-2015-0044599 (published on April 27, 2015)

### [DETAILED DESCRIPTION OF THE INVENTION]

### [Technical Problem]

It is an object of the present disclosure to provide a battery pack, and a device including automobiles and the like that exhibit excellent energy density, assembly property and/or cooling performance.

It is another object of the present disclosure to provide a battery pack that prevents continuous thermal runaway phenomena caused by indiscriminate discharge of high-temperature gas, thereby improving the durability and safety, and a device including the same.

However, technical subjects of the present disclosure are not limited to the foregoing technical subjects, and any other technical subjects not mentioned will be clearly understood by a skilled person in the art from the following description.

### [Technical Solution]

According to one embodiment of the present disclosure, there is provided a battery pack comprising: a plurality of battery cells stacked in one direction; a pack case that houses the battery cells in an inner space thereof; a cell cover that at least partially surrounds at least a part of the plurality of battery cells in the inner space of the pack case; a busbar assembly that electrically connects the plurality of battery cells; and a first sealing member mounted to the busbar assembly.

The busbar assembly comprises a first groove, which is a region dug at a prescribed depth along an edge thereof, and the first sealing member may be mounted in the first groove.

A width of the first sealing member may be smaller than or equal to a width of the first groove, and a height of the first sealing member may be larger than or equal to a height of the first groove.

The first sealing member may be formed of an elastic material.

The battery pack may further comprise a second sealing member mounted to the cell cover.

The cell cover may comprise an upper side cover portion that surrounds the upper portion of the battery cell, a first side cover portion that extends in a lower direction from one end of the upper side cover portion, and a second side cover portion that extends in a lower direction from the other end of the upper side cover portion, and the second sealing member may be provided along inner surfaces of the upper side cover portion, the first side cover portion, and the second side cover portion.

The second sealing member may be provided in a second groove, which is a region dug at a prescribed depth along inner surfaces of the upper side cover portion, the first side cover portion, and the second side cover portion.

The second sealing member may be formed by being applied along the second groove and then cured.

The second sealing member may be formed of a resin.

The second sealing member may be formed of a CIPG (Cured In Place Gasket) material.

The first sealing member and the second sealing member may be located while contacting with each other.

The first sealing member may have a hardness greater than a hardness of the second sealing member.

The first sealing member may have a shape change degree that is less than a shape changed degree of the second sealing member

According to another embodiment of the present disclosure, there is provided a battery pack comprising: a plurality of battery cells stacked in one direction; a pack case that houses the battery cells in an inner space thereof; a cell cover that at least partially surrounds at least a part of the plurality of battery cells in the inner space of the pack case; a busbar assembly that electrically connects the plurality of battery cells; and a second sealing member mounted to the cell cover.

According to yet another embodiment of the present disclosure, there is provided a device comprising the above-mentioned battery pack.

### [Advantageous Effects]

According to embodiments of the present disclosure, a large number of battery cells can be stably housed in the pack case without a configuration of a stacking frame such as a plastic cartridge or a separate module case. Moreover, according to one aspect of the present disclosure, a battery cell having a ductile material case can be easily formed into a robust configuration, thereby easily realizing a configuration that is directly stacked inside the pack case.

In particular, according to one embodiment of the present disclosure, it is possible to easily realize a configuration in which a large number of battery cells are stacked side by side in a horizontal direction in a state in which a large number of battery cells are erected in a vertical direction.

According to one aspect of the present disclosure, it is possible to improve the energy density of a battery pack.

Moreover, according to one embodiment of the present disclosure, since the battery cells are directly housed in the pack case without being modularized, a module case or the like of the battery module is not required. Therefore, the space occupied by such a module case can be reduced, so that more battery cells can be disposed inside the pack case. Therefore, it is effective in further improving the energy density of the battery pack.

Further, according to one aspect of the present disclosure, it is possible to improve the assembly property of the battery pack. In particular, according to one embodiment of the present disclosure, a step of housing battery cells in a module case to prepare a battery module, a step of housing one or more battery modules thus prepared into a pack case, and the like, may not be performed. Therefore, the manufacturing process can be simplified and the manufacturing time can be reduced.

Further, according to one aspect of the present disclosure, a configuration that changes the number of battery cells covered by the cell cover can be easily realized. In particular, according to one embodiment of the present disclosure, by changing the width of the cell cover, the number of unit cells housed by the cell cover can be easily changed. Therefore, in this case, it is possible to easily make changes to the capacity or output by one cell cover.

Further, according to one embodiment of the present disclosure, for each cell unit, it is possible to easily realize a configuration in which a busbar or a terminal of each unit is located on the side surface, upper portion, lower portion, or the like of each cell cover.

Further, according to one embodiment of the present disclosure, in the process of housing the ductile battery cell inside the pack case, the cell cover may be held without directly holding the battery cell. Therefore, a process of handling the battery cell can be performed more easily and safely. Furthermore, in this case, it is possible to prevent the battery cell from being damaged or broken during the process of handling battery cells, such as housing the battery cells inside the pack case.

Further, according to one aspect of the present disclosure, it is possible to improve the cooling performance of the battery pack. In particular, according to one embodiment, since a part of each battery cell is directly exposed to the pack case, the heat of each battery cell can be effectively discharged to the outside through the pack case.

Further, according to one embodiment of the present disclosure, it is possible to perform additional surface cooling through the large surfaces of the battery cells.

Further, according to one aspect of the present disclosure, it is possible to improve the safety of the battery pack.

In particular, according to one embodiment of the present disclosure, gas discharged from each battery cell can be smoothly discharged to the outside. Furthermore, according to an embodiment of the present disclosure, it is possible to control the discharge direction of gas or flame discharged from the battery cell. Therefore, it is possible to effectively prevent thermal runaway propagation between adjacent battery cells.

In addition, according to one embodiment of the present disclosure, it is possible to prevent indiscriminate discharge of high-temperature gas to the outside of the battery cell, thereby preventing continuous thermal runaway phenomena.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a schematic perspective view which separates and shows a partial configuration of a battery pack according to an embodiment of the present disclosure;
FIG. 2 is an exploded perspective view which schematically shows the configuration of a battery cell and a cell cover housed inside a battery pack according to an embodiment of the present disclosure;
FIG. 3 is a perspective view showing a state in which the battery cell and the cell cover of FIG. 2 are coupled with each other;
FIG. 4 is a diagram showing a sealing member mounted on a busbar assembly according to an embodiment of the present disclosure;
FIG. 5 is an exploded perspective view which schematically shows the configuration of a battery cell and a cell cover housed inside a battery pack according to another embodiment of the present disclosure;
FIG. 6 is a diagram showing a sealing member mounted on a cell cover according to an embodiment of the present disclosure;
FIG. 7 is an exploded perspective view which schematically shows the configuration of a battery cell and a cell cover housed inside a battery pack according to yet another embodiment of the present disclosure;
FIG. 8 is an exploded perspective view showing a configuration in which sealing members are respectively coupled to the cell cover and the busbar assembly of FIG. 7;
FIG. 9 is a cross-sectional view taken along B-B' when the cell cover and the busbar assembly of FIG. 8 are coupled with each other; and
FIGS. 10 to 12 are partial perspective views which schematically show a partial configuration of a battery pack according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and a region are exaggerated.

In addition, it will be understood that when an element such as a layer, film, region, or plate is referred to as being formed or disposed "on" or "above" another element, it should be interpreted as including not only a case where an element such as a layer, film, region, or plate is directly on the other element but also a case where intervening elements are present. In contrast, when an element such as a layer, film, region, or plate is referred to as being formed or disposed "directly on" another element, it may mean that other intervening elements are not present. Further, the word "on" or "above" means disposed on or below a reference portion, and does not necessarily mean being disposed on the upper end of the reference portion toward the opposite direction of gravity. Meanwhile, similar to the case where it is described as being formed or disposed "on" or "above" another part, the case where it is described as being formed or disposed "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

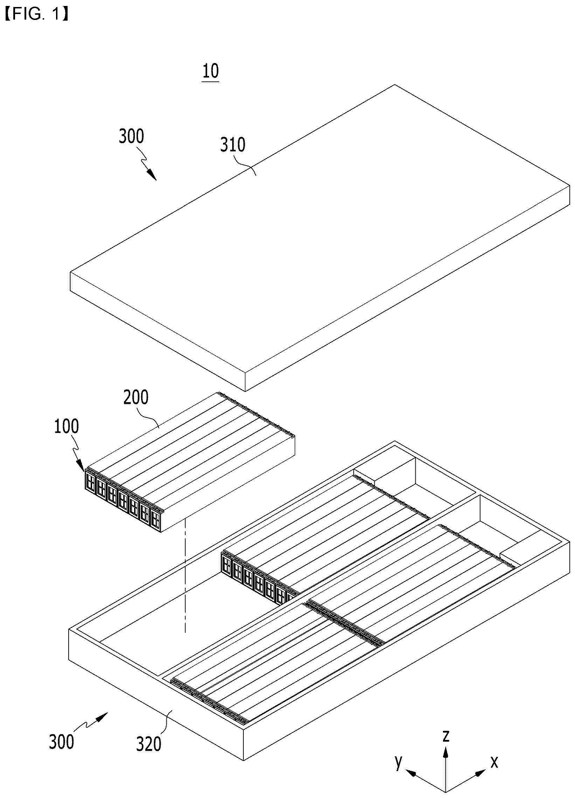

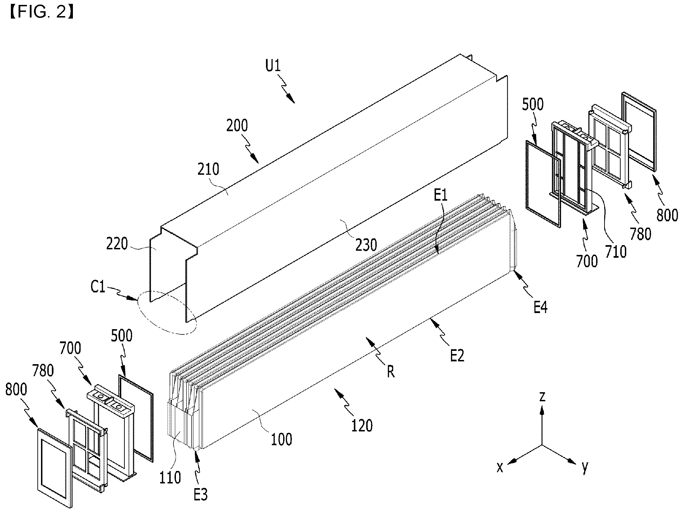

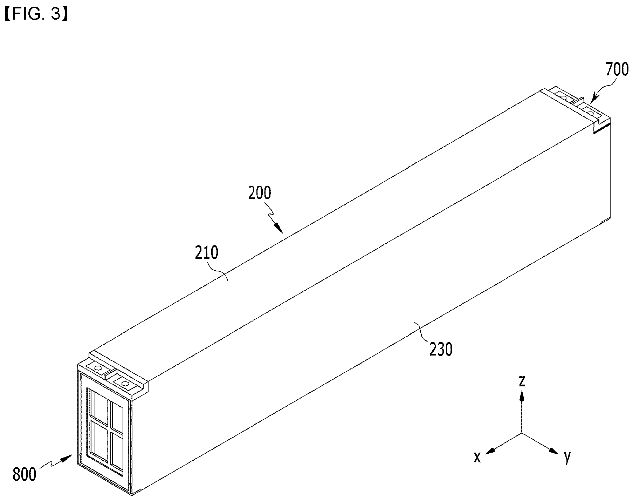

FIG. 1 is a schematic perspective view which separates and shows a partial configuration of a battery pack according to an embodiment of the present disclosure. FIG. 2 is an exploded perspective view which schematically shows the configuration of a battery cell and a cell cover housed inside a battery pack according to an embodiment of the present disclosure. FIG. 3 is a perspective view showing a state in which the battery cell and the cell cover of FIG. 2 are coupled with each other.

Referring to FIGS. 1 to 3, the battery pack 10 according to an embodiment of the present disclosure includes a battery cell 100, a pack case 300, and a cell cover 200.

A plurality of such battery cells 100 may be included in a battery pack. And, the plurality of battery cells 100 may be stacked in at least one direction. For example, referring to those shown in FIGS. 1 and 2, the plurality of battery cells 100 may be stacked and disposed in a horizontal direction, for example, in a left-right direction (y-axis direction in the figure). Further, the plurality of battery cells 100 may also be disposed in a front-back direction (x-axis direction in the figure) as shown in FIG. 1.

Moreover, although the plurality of battery cells 100 are arranged in the horizontal direction, they may be arranged in a shape forming a plurality of rows in the left-right direction and the horizontal direction. For example, referring to those shown in FIG. 1, the plurality of battery cells 100 may be stacked such that two rows of cells disposed in the left-right direction (y-axis direction and -y-axis direction) are provided in the front-back direction (x-axis direction and -x-axis direction).

The battery pack according to the present disclosure can employ various forms of battery cells 100 known at the time of filing the present application. As an example, the battery cell may be a pouch-type battery cell. Such a pouch-type battery cell may be formed by housing an electrode assembly in a pouch case made of a laminate sheet including a resin layer and a metal layer, and then fusing the outer peripheral portion of the pouch case. Such battery cells may be formed in a rectangular sheet structure. However, the structure of the battery cell is not limited thereto, and various types of battery cells can be applied. Therefore, detailed descriptions of the configuration or the like of the battery cell are omitted.

The pack case 300 has an empty space formed in the inside thereof, and can house a plurality of battery cells 100. For example, the pack case 300 may comprise an upper case 310 and a lower case 320 as shown in FIG. 1. As a more specific example, the lower case 320 is configured in a box shape having an open upper end, and can house a plurality of battery cells in the inner space. And, the upper case 310 may be configured in a lid shape that covers the open upper end of the lower case 320. At this time, the upper case 310 may be configured in a box shape having an open lower end. Further, in the inner space of the pack case 300, the cell cover 200 may also be housed together with the plurality of battery cells 100. The pack case 300 may be formed of a plastic or metal material. In addition, the pack case 300 may employ exterior cladding materials of various battery packs known at the time of filing of the present application.

The cell cover 200 may be configured to surround battery cells 100 in the inner space of a pack case. That is, the cell cover 200 may be configured to surround at least a part of the battery cells 100 among the plurality of battery cells 100 included in the battery pack. Moreover, the cell cover 200 may be provided to at least partially surround the battery cell 100.

Further, the cell cover 200 may be configured to support the stacked state of the plurality of battery cells 100 inside the pack case 300 through a structure that surrounds the battery cells in this way. For example, as shown in FIG. 1, a plurality of battery cells 100 may be stacked in a horizontal direction (Y-axis direction in the figure). At this time, the cell cover 200 may be configured to stably maintain the stacked state of the plurality of battery cells 100 stacked in the horizontal direction in this way.

According to the aspect of the present disclosure, a plurality of battery cells 100 can be directly seated and housed inside the pack case 300 without a module case. In particular, in the case of the battery cells 100, the exterior cladding material is made of a ductile material, so that it may be vulnerable to external impact and low in hardness. Therefore, it is not easy to house only the battery cells 100 themselves inside the pack case 300 without housing them in the module case. However, according to the present disclosure, the plurality of battery cells 100 are coupled with the cell cover 200 while being at least partially surrounded by the cell cover 200, and are directly housed in the pack case 300, and the stacked state thereof can be stably maintained.

Therefore, according to the aspect of the present disclosure, the battery pack 10 does not need to be further provided with a module case, a stacking frame, or a fastening member such as a bolt for maintaining the stacked state of cells. Therefore, a space occupied by other components such as a module case or a stacking frame or a space for securing tolerance resulting therefrom can be eliminated. Therefore, the battery cells can occupy more space by the eliminated space, thereby further improving the energy density of the battery pack.

Further, according to the aspect of the present disclosure, since a module case, a stacking frame, a bolt, and the like are not provided, the volume or weight of the battery pack can be reduced, and the manufacturing process can be simplified.

Further, according to the aspect of the present disclosure, handling of the battery cell 100 can be made easier. For example, when a plurality of battery cells 100 are housed inside a pack case, the battery cells 100 may be held by a jig or the like. At this time, the jig does not directly hold the battery cell 100, but can hold the cell cover 200 surrounding the battery cell 100. Therefore, it is possible to prevent damage or breakage of the battery cell 100 due to the jig.

Further, according to the aspect of the present disclosure, the cell cover 200 is coupled to the battery cell 100, thereby capable of effectively protecting the battery cell 100 without a module case.

The cell cover 200 may be composed of various materials to secure rigidity. In particular, the cell cover 200 may be composed of a metal material. In the case of such a metal material, the stacked state of the battery cells can be more stably maintained, and the battery cells can be more safely protected from external impact. In particular, the cell cover 200 may comprise a steel material, more specifically a stainless steel (SUS) material. For example, the cell cover 200 may be entirely made of SUS material.

When the cell cover 200 is made of a steel material in this way, it has excellent mechanical strength and rigidity, so that the stacked state of the battery cells 100 can be more stably supported. Further, in this case, it is possible to more effectively prevent damage or breakage of the battery cell 100 from an external impact, for example, an acicular body or the like. Furthermore, in this case, handling of the battery cell can be made easier.

Further, when the cell cover 200 is made of a steel material as in the above embodiment, the overall structure can be stably maintained due to its high melting point when flames generate from the battery cells 100. In particular, since the steel material has a higher melting point than an aluminum material, it does not melt even by the flames ejected from the battery cell 100, and its shape can be stably maintained. Therefore, it is possible to excellently secure flame propagation prevention or delay effects between battery cells 100, venting control effects, and the like.

The cell cover 200 may be configured to surround one or more battery cells 100. For example, as shown in FIGS. 2 and 3, the cell cover 200 may be configured to surround two or more battery cells 100 together. However, the present disclosure is not limited thereto, and one cell cover 200 may be configured to surround only one battery cell 100. In this case, the cell cover 200 may be individually coupled to each battery cell 100 among the plurality of battery cells 100.

The cell cover 200 may be at least partially adhered to the outer side surface of the battery cell 100. For example, the cell cover 200 may be configured such that its inner side surface is adhered to a receiving portion of the battery cell 100.

One or more cell covers 200 may be included in the battery pack 10. In particular, the cell cover 200 may be configured so that the plurality of battery cells 100 included in a battery pack 10 are grouped into a unit. In this case, one cell cover 200 may constitute one cell unit. Further, one cell unit may include one or more battery cells 100. For example, FIG. 2 shows one cell unit as indicated by U1. The battery pack 10 may include a large number of cell units U1, and in this case, a large number of cell covers 200 may be included in the battery pack 10. As an example, when the cell cover 200 is configured to surround one battery cell 100, the battery pack 10 may include the same number of cell covers 200 as the number of battery cells 100. As another example, when the cell cover 200 is configured to surround two or more battery cells 100, the battery pack 10 may include a smaller number of cell covers 200 than the number of battery cells 100.

The cell cover 200 may be configured to support the plurality of battery cells 100 in an erected state. As shown in FIG. 2, each battery cell 100 has two wide surfaces, and corner portions of the wide surfaces may have a sealing portion or a folded portion of the pouch exterior cladding material. Therefore, it is generally difficult to stack the battery cells 100 in a shape of being erected in an upper and lower direction (z-axis direction and -z-axis direction). However, in the battery pack 10 according to the present disclosure, the cell cover 200 may be configured to surround one or more battery cells 100 and also support the surrounded battery cells 100 in an erected state, that is, a standing state.

In particular, the cell cover 200 may be configured such that a large number of battery cells 100 can be stacked in a horizontal direction in a state of being erected in an upper and lower direction. For example, similar to the embodiment shown in FIG. 1, a large number of cell covers 200 are stacked with each other in a horizontal direction, and each cell cover 200 may be configured to surround one or more battery cells 100. In this case, the cell cover 200 may make it possible to stably maintain a configuration in which a large number of battery cells 100 are stacked side by side in a horizontal direction in a state where each cell is erected.

In particular, the cell cover 200 may be configured to be self-supportable in the inner space of the pack case 300. That is, the cell cover 200 may be configured to maintain an erected state by itself without the aid of other components provided in the battery pack 10, such as the pack case 300 or the battery cell 100.

For example, in the embodiment shown in FIG. 1, the cell cover 200 may be directly seated on the bottom surface of the lower case 320. At this time, a part of the cell cover 200, for example, a lower end C1 of the cell cover 200 indicated by C1 in FIG. 2 may be seated in direct contact with the bottom surface of the lower case 320. In addition, the cell cover 200 may, when the lower end C1 is seated in this way, be configured to stably maintain the seated state. At this time, when the cell cover 200 is composed of a metal material having excellent rigidity like steel, especially a SUS material, it is possible to more stably maintain the self-supporting state. Therefore, in this case, the erected state of the battery cell 100 can be supported more reliably.

The cell cover 200 may be configured to partially surround the battery cell 100 so that at least one side of the surrounded battery cell 100 is exposed to the outside. That is, the cell cover 200 may be configured to surround only a part of the battery cell 100 without completely surrounding the battery cell as a whole. In particular, the cell cover 200 may be configured such that at least one side of the battery cell 100 is exposed toward the pack case 300.

For example, referring to the embodiments shown in FIGS. 2 and 3, the cell cover 200 is configured to surround one battery cell 100, wherein the surrounded battery cell 100, that is, the lower portion of the battery cell 100 housed in the inner space, may not be surrounded by the cell cover 200. Therefore, the lower portion of the battery cell 100 is exposed toward the pack case 300, and may directly face the pack case 300. In particular, referring to the embodiment shown in FIG. 1, the lower portion of the battery cell 100 may be exposed toward the bottom surface of the lower case 320.

According to the embodiment of the present disclosure, it is possible to more effectively secure the cooling performance of the battery pack 10. In particular, according to the above embodiment, the battery cell 100 and the pack case 300 may be brought into direct face-to-face contact. Therefore, heat emitted from each battery cell 100 is directly transferred to the pack case 300, thereby capable of improving the cooling performance. Further, in this case, since a separate cooling structure does not need to be provided between the battery cell 100 and the pack case 300, efficient cooling performance can be realized. Further, in this case, a space for flowing a coolant such as air between the battery cells 100 may not be provided.

Each battery cell 100 may be provided with a receiving portion indicated by R and edge portions indicated by E1 to E4, as shown in FIG. 2. Here, the receiving portion R may be a portion that houses an electrode assembly configured such that a cathode plate and an anode plate are stacked with each other with a separator interposed therebetween. In addition, an electrolyte solution may be housed in the receiving portion R. And, the edge portions E1 to E4 may be disposed so as to surround the periphery of such a receiving portion R.

In particular, the edge portions E1 to E4 may be sealing portions in which a pouch exterior cladding material, which is a case of the battery cell 100, has been sealed. For example, in the embodiment of FIG. 2, four edge portions E1 to E4 are provided, which may be respectively located at an upper side edge (z-axis direction), a lower side edge (-z-axis direction), a front side edge (x-axis direction), and a rear side edge (-x-axis direction) with respect to the receiving portion R. At this time, all of the four edge portions E1 to E4 may be sealing portions. Alternatively, some of the four edge portions E1 to E4 may be formed in a folded shape rather than a sealing portion. For example, in the embodiment shown in FIG. 2, the upper side edge portion E1, the front side edge portion E3, and the rear side edge portion E4 are all sealing portions, but the lower side edge portion E2 may be a folded portion of the pouch exterior cladding material. Here, the battery cell 100 in which all four edge portions E1 to E4 are sealed may be referred to as a four-sided sealing cell, and the battery cell in which three edge portions E1, E3 and E4 are sealed may be referred to a three-sided sealing cell.

In such a configuration, the cell cover 200 may be configured to surround both sides (y-axis direction and -y-axis direction) of the receiving portion R and a part of the edge portions E1 to E4 of the receiving portion R in the battery cell 100. For example, as shown in FIG. 2, when one cell cover 200 is configured to surround one battery cell 100, the cell cover 200 may be configured to surround both surfaces of the receiving portion R of the same battery cell 100 (e.g., the left surface and right surface of the same receiving portion R) and a part of the edge portion of the battery cell 100 from the outside. As another example, when one cell cover 200 is configured to surround a plurality of battery cells 100, for example, a plurality of battery cells disposed in the left and right directions, it may be configured to surround the outer surfaces of the receiving portions R of the outermost battery cells 100 and one-side edge portions of the entire battery cells 100. As a more specific example, one cell cover 200 may be configured to surround three or six battery cells 100 stacked in the left and right directions. At this time, the cell cover 200 may be configured to surround the left surface of the left battery cell, one side edge portions of 3 or 6 battery cells, and the right surface of the right battery cell.

According to such an embodiment, as one cell cover 200, a configuration for supporting and protecting one or more battery cells 100 can be easily realized. Further, according to the above embodiment, a process of handling one or more battery cells 100 can be easily and safely performed through the cell cover 200. Further, according to the above embodiment, one cell cover 200 may face the surfaces of the two receiving portions R with respect to the battery cells 100 housed in the inside thereof. Therefore, cooling performance between the receiving portion R and the cell cover 200 can be further improved. In particular, in this case, surface cooling can be realized through the wide surface of the receiving portion R, thereby improving the cooling efficiency.

Meanwhile, in the battery pack 10 according to the present disclosure, a thermal interface material (TIM) may be interposed between mutually different components in order to increase heat transfer performance. For example, the TIM may be filled between the battery cell 100 and the cell cover 200, between the cell cover 200 and the pack case 300, and/or between the battery cell 100 and the pack case 300. In this case, the cooling performance of the battery pack, for example, dual cooling performance or the like, can be further improved.

In particular, the cell cover 200 may be configured to surround an edge portion that is not provided with an electrode lead 110 among multiple edge portions of the battery cells 100 housed in the inside thereof. For example, referring to the embodiment shown in FIG. 2, the battery cell 100 may comprise two electrode leads 110, that is, a cathode lead and an anode lead. At this time, the two electrode leads 110 may be respectively located at the front side edge portion E3 and the rear side edge portion E4. At this time, the cell cover 200 may be configured to surround one of the remaining two edge portions E1 and E2 excluding the front side edge portion E3 and the rear side edge portion E4.

Referring to FIGS. 2 and 3, the battery cell 100 may be formed in a substantially hexahedral shape. And, the electrode leads 110, that is, an anode lead and a cathode lead, may be respectively formed on two of the six surfaces. Further, the cell cover 200 is provided to surround at least a part of three of the remaining four surfaces excluding the two surfaces on which the electrode leads 110 are formed at the six-surface battery cells 100.

According to the embodiment of the present disclosure, it is possible to guide the discharge direction of the flame or the like to the exposed side surface of the cell cover 200. For example, according to the embodiment, since the front side (x-axis direction) and the rear side (-x-axis direction) of the cell cover 200 where the electrode lead 110 is located are open, it makes it possible to discharge flame or the like in such an open direction. In particular, when the cell cover 200 is configured such that the front side and the rear side are open as described above, side directional venting can be easily realized.

Furthermore, the cell cover 200 may be provided in a form of covering both side surfaces of the receiving portion R and the upper side edge portion E1 with respect to one or more battery cells 100 housed and surrounded in the inside thereof. For example, referring to those shown in FIG. 2, when the cell cover 200 is configured to surround six battery cells 100 stacked in the left and right directions, the cell cover 200 may be configured to surround the left surface of the left outermost battery cell receiving portion, the upper side edge portions E1 of the six battery cells, and the right surface of the right outermost battery cell receiving portion. As another example, with respect to one battery cell 100, it may be configured to surround both the left surface and the right surface of the receiving portion R, and the upper side edge portion E1.

According to the embodiment of the present disclosure, a configuration that supports and protects one or more battery cells 100 can be easily realized by one cell cover 200. In particular, according to the above embodiment, the lower side edge portion E2 may be in direct face-to-face contact with the pack case 300 without being surrounded by the cell cover 200. Therefore, the heat of the battery cells 100 surrounded by the cell cover 200 can be quickly and smoothly discharged to the lower pack case 300 side. Thus, it is possible to more effectively secure the cooling performance of the battery pack.

In particular, such a configuration can be more effectively implemented when cooling is mainly performed in the lower portion of the pack case 300. For example, in the case of a battery pack mounted on an electric vehicle, since the pack is mounted on the lower portion of the vehicle body, cooling can be mainly performed in the lower portion of the pack case 300. At this time, when the lower side edge portion E2 of each battery cell 100 is in face-to-face contact with the pack case 300 as in the above embodiment, heat is quickly transferred from each battery cell 100 to the pack case 300 side, so that the cooling performance can be further improved.

Further, according to the above embodiment, when high-temperature gas, flame, or the like is discharged from the battery cell 100 in a situation such as thermal runaway, it is possible to effectively prevent the discharged gas or flame from being directed to the upper side. In particular, when a passenger is located on the upper side of the battery pack 10 as in an electric vehicle or the like, according to the above embodiment, it is possible to suppress or delay the flow of gas, flame, and the like toward the passenger.

Referring to FIGS. 2 and 3, the cell cover 200 may be formed in a shape generally similar to the letter n. And, through such a configuration, the cell cover 200 may be configured to cover other portions of the battery cell 100 housed in the inside, except for the front side (x-axis direction) and the rear side (-x-axis direction) where the electrode lead 110 protrudes, and the lower side (-z axis direction). That is, the cell cover 200 may be provided to cover the outer side and the upper side of the receiving portion R of the battery cell 100 housed in the inside thereof.

More specifically, the cell cover 200 may include an upper side cover portion 210, a first side cover portion 220, and a second side cover portion 230 as shown in FIGS. 2 and 3.

Here, the upper side cover portion 210 may be configured to surround the upper portion of the upper side edge portion E1 of the battery cell 100 housed in the inside thereof. In particular, the upper side cover portion 210 may be configured to contact with or be spaced apart from the upper side edge portion E1 of the battery cell 100. Further, the upper side cover portion 210 may be configured in a planar shape. In this case, the upper side cover portion 210 may have a cross section formed in a straight line shape in a horizontal direction, so that the upper side edge portion E1 of the battery cell 100 can be surrounded in a straight line shape from the outside.

The first side cover portion 220 may be configured to extend in a lower direction from one end of the upper side cover portion 210. For example, the first side cover portion 220 may be configured to extend long in a lower direction (-z-axis direction in the figure) at the left side end (-y-axis direction) of the upper side cover portion 210. Moreover, the first side cover portion 220 may be formed in a planar shape. At this time, the first side cover portion 220 may be configured in a shape of being bent at the upper side cover portion 210.

Further, the first side cover portion 220 may be configured to surround the outer side of one side receiving portion R of the battery cell 100 housed in the inside thereof. For example, when one battery cell 100 is housed in the cell cover 200, the first side cover portion 220 may be configured such that the left side surface of the receiving portion R of the housed battery cell 100 is surrounded from the left side. Here, the first side cover portion 220 may directly contact the outer side surface of the receiving portion R.

The second side cover portion 230 may be located to be spaced apart from the first side cover portion 220 in a horizontal direction. Further, the second side cover portion 230 may be configured to extend in a lower direction (-z-axis direction) from the other end of the upper side cover portion 210. For example, the second side cover portion 230 may be configured to extend long in a lower direction (-z-axis direction) at the right end (y-axis direction) of the upper side cover portion 210. Moreover, the second side cover portion 230 may also be configured in a planar shape similar to the first side cover portion 220. At this time, the second side cover portion 230 and the first side cover portion 220 may be disposed in parallel to each other in a state of being spaced apart in a horizontal direction.

Further, the second side cover portion 230 may be configured to surround the outer side of the other side receiving portion R of the battery cell 100 housed in the inside thereof. For example, when one or more battery cells 100 are housed in the cell cover 200, the second side cover portion 230 may be configured such that the right side surface of the receiving portion R of the housed outermost right side battery cell 100 is surrounded from the right side. Here, the second side cover portion 230 may directly contact the outer side surface of the receiving portion R.

In the above embodiment, the inner space may be defined by the upper side cover portion 210, the first side cover portion 220 and the second side cover portion 230. Further, the cell cover 200 may house one or more battery cells in the inner space defined in this way.

Further, in the above embodiment, the lower side ends of the first side cover portion 220 and the second side cover portion 230 as indicated by C1 in FIG. 2, may contact the bottom surface of the pack case 300. In particular, such a contact configuration between the lower side ends C1 of the first side cover portion 220 and the second side cover portion 230 and the pack case 300 may be configured to extend long in a front and back direction (x-axis direction and - x-axis direction of the figure). According to such an embodiment, it is possible to more stably realize the self-supporting configuration of the cell cover 200 that can maintain the battery cell 100 housed in the inside in a standing state.

Moreover, the first side cover portion 220 and the second side cover portion 230 may have the same height as each other. That is, the first side cover portion 220 and the second side cover portion 230 may be identical in the length extending in a lower direction from the upper side cover portion 210. In this case, the self-supporting configuration of the cell cover 200 can be more easily realized.

Meanwhile, the cell cover 200 and the battery cell 100 according to an embodiment of the present disclosure will be described again. The upper side cover portion 210 may face the upper side edge portion E1 of the battery cell 100, and may surround the upper side edge portion E1 together with the first side cover portion 220 and the second side cover portion 230.

Further, the cross-sectional area of the first side cover portion 220 and the second side cover portion 230 is formed larger than the cross-sectional area of the battery cell 100 where the first side cover portion 220 and the second side cover portion 230 face each other, thereby being able to prevent the receiving portion R from being exposed to the outside and thus secure the safety to a maximum.

In particular, the battery cell 100 may include a sealing portion and an unsealed portion as the edge portions E1 to E4. For example, in the embodiment of FIG. 2, the upper side edge portion E1 may be a double side folded(DSF) portion as a sealing portion of the battery cell 100, and the lower side edge portion E2 may be an unsealed portion of the battery cell 100.

Here, the cell cover 200 may be configured to surround the battery cell 100, wherein among the edge portions E1 to E4, at least a part of the sealing portion is surrounded, and at least a portion of the unsealed portion is not surrounded, to thereby be exposed to the outside. For example, referring to the embodiment of FIG. 2, the cell cover 200 may be configured to cover an upper side edge portion E1, which is a part of a sealing portion of the battery cell 100. In this case, the battery cell 100 housed inside the cell cover 200 may be configured such that the upper side edge portion E1, which is a sealing portion, faces the upper side cover portion 210. Further, the cell cover 200 may surround the battery cell 100 so that the lower side edge portion E2, which is an unsealed portion of the battery cell 100, is exposed to the outside. In this case, the lower side edge portion E2, which is an unsealed portion of the battery cell 100, may be disposed on the open surface of the cell cover 200.

In the battery cell 100, the upper side edge portion E1 as a sealing portion may be more vulnerable to discharge of relatively high-temperature gas or flame than the lower side edge portion E2, which is an unsealed portion. By the way, according to the above embodiment, the upper side edge portion E1, which is a sealing portion, is arranged so as to face the upper side cover portion 210, which may be more advantageous for directional venting.

Further, in the battery cell 100, the lower side edge portion E2 as an unsealed portion is provided in a flat shape with a relatively wider cross-sectional area than the upper side edge portion E1, which is a sealing portion, and may be disposed on the open surface of the cell cover 200, and directly contact the thermal resin 326 which will be described later, to thereby increase cooling efficiency.

Furthermore, when the lower case 320 is seated on one surface of the vehicle body, the first side cover portion 220 and the second side cover portion 230 may be extended from the upper side cover portion 210 toward one surface of the vehicle body, and the upper side edge portion E1 may be disposed farther from one surface of the vehicle body than the lower side edge portion E2. That is, when the lower case 320 is seated on one surface of the vehicle body, the cell cover 200 may be configured such that a surface disposed relatively close to one surface of the vehicle body is opened.

Conversely, when the upper case 310 is seated on one surface of the vehicle body, the first side cover portion 220 and the second side cover portion 230 may extend away from the one surface of the vehicle body at the upper side cover portion 210, and the upper side edge portion E1 may be disposed closer to one surface of the vehicle body than the lower side edge portion E2. That is, when the upper case 310 is seated on one surface of the vehicle body, the cell cover 200 may be configured such that a surface disposed relatively far from one surface of the vehicle body is opened.

That is, the arrangement of the cell cover 200 and the battery cell 100 can be set variously according to the relationship between the vehicle body, the pack case 300, and the configuration disposed on the vehicle body other than the pack case 300.

Meanwhile, in the above embodiment, the cell cover 200 having an n-shaped configuration has been mainly shown and described, but the cell cover 200 can be configured in various other shapes. For example, the cell cover 200 may be formed in various other shapes such as an I-shape, a U-shape, and an L-shape.

The battery pack according to the present disclosure may further include a busbar assembly 700. Here, the busbar assembly 700 may be configured to electrically connect the plurality of battery cells 100 to each other. For example, the busbar assembly 700 may be coupled to the electrode leads 110 of the plurality of battery cells 100 to electrically connect between the plurality of battery cells 100 in series and/or in parallel. The busbar assembly 700 may comprise a busbar terminal that is composed of an electrically conductive material such as copper or aluminum and is in direct contact with the electrode lead 110, and a busbar housing that is made of an electrically insulating material such as plastic and supports the busbar terminal.

Moreover, when the electrode leads 110 are provided on both sides of the battery cells 100, the busbar assembly 700 may also be included on both sides where the electrode lead 110 is provided. For example, as shown in FIG. 2, when the electrode lead 110 protrudes to both the front side (x-axis direction) and the rear side (-x-axis direction), the busbar assembly 700 may also be located on both the front side and the rear side.

The busbar assembly 700 may be coupled with one or more cell covers 200. For example, referring to those shown in FIG. 1, two or more cell covers 200 are configured to surround different battery cells 100, and are stacked in a horizontal direction (y-axis direction and -y-axis direction). At this time, the busbar assembly 700 may be coupled to the front end (x-axis direction) and the rear end (-x-axis direction) of the two or more cell covers 200, respectively. In particular, in such embodiments, one busbar assembly 700 may be coupled to ends of two or more cell covers 200. As another example, one busbar assembly 700 may also be coupled to an end of one cell cover 200. At this time, one or a plurality of battery cells 100 may be housed in one cell cover 200 .

The busbar assembly 700 may be coupled with the cell cover 200 in various ways. For example, the busbar assembly 700 may be coupled and fixed to the cell cover 200 through various fastening methods such as adhesion, welding, fitting, hooking, bolting, and riveting.

Additionally, the busbar assembly 700 may include a first groove 710 formed along an edge. A first sealing member 500 may be provided in the first groove 710, and therefore, when the busbar assembly 700 is coupled with the cell cover 200, the first sealing member 500 is interposed between them so that they can be coupled without assembly tolerance. That is, the first sealing member 500 may be mounted on the busbar assembly 700. Thereby, it is possible to improve the waterproof and dustproof performance of the battery pack and improve the assembly property.

Referring to FIGS. 2 and 3, the battery pack according to the present disclosure may further include an insulating cover portion 780. At this time, the insulating cover portion 780 is made of an electrical insulating material, prevents the busbar assembly 700 from being exposed to the outside by the end plate, and can secure and maintain electrical insulation properties.

Meanwhile, the battery pack according to the present disclosure may further include an end cover 800. The end cover 800 may be mounted on both open sides of the cell cover 200 while covering the busbar assembly 700 and the insulating cover portion 780. The end cover 800 may secure structural stability of the cell unit by fixing the busbar assembly 700 and the insulating cover portion 780. Further, the end cover 800 can protect the busbar assembly 700, the plurality of battery cells 100, and other electrical components from external impacts. The end cover 800 is provided with at least one hole so that a part of the insulating cover portion 780 can be exposed. Accordingly, when high temperature gas or flame is generated from the battery cell 100 under high temperature and high pressure conditions, it can be discharged to the outside.

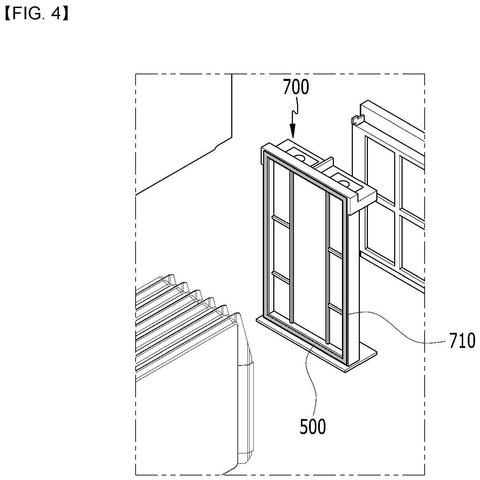

FIG. 4 is a diagram showing a sealing member mounted on a busbar assembly according to an embodiment of the present disclosure.

Referring to FIG. 4, a first sealing member 500 may be mounted on the busbar assembly 700 according to an embodiment of the present disclosure. More specifically, the busbar assembly 700 may include a first groove 710 to which the first sealing member 500 is mounted.

The first groove 710 may be a region dug at a prescribed depth along the edge of the busbar assembly 700. The first sealing member 500 may be mounted in the first groove 710.

The first sealing member 500 is a member further located in the busbar assembly 700, and when the busbar assembly 700 is coupled with the cell cover 200, the sealing member can improve the degree of sealing and improve the waterproof and dustproof performance of the battery pack. Further, the first sealing member 500 may allow the cell cover 200 and the busbar assembly 700 to be coupled without an assembly tolerance, thereby preventing high-temperature gas or flame generated from the battery cell from being discharged to the outside.

The shape of the first sealing member 500 may correspond to the edge shape of the busbar assembly 700. That is, the shape of the first sealing member 500 may correspond to the shape of the first groove 710 of the busbar assembly 700.

Specifically, the width of the first sealing member 500 may be smaller than or equal to the width of the first groove 710, and the height of the first sealing member 500 may be larger than or equal to the height of the first groove 710.

The first sealing member 500 may be formed of an elastic material. For example, the first sealing member 500 may be formed of a rubber. Therefore, when pressure is applied to the first sealing member 500, the shape of the first sealing member 500 may change as pressure is applied. For example, when pressure is applied to the first sealing member 500, the shape of the first sealing member 500 mounted in the first groove 710 is changed, and an empty space may not be formed in the first groove 710. Therefore, it is possible to prevent moisture or dust from entering the battery pack from the outside, thereby improving the waterproof and dustproof performance of the battery pack. Further, when the battery is charged and discharged, if the temperature and pressure inside the battery cell increase and high-temperature gas or flame is generated, the first sealing member 500 closes the gap between the cell cover 200 and the busbar assembly 700. Thus, since that high-temperature gas or flame cannot be discharged through the gap, venting direction of gas or flame can be controlled. Therefore, the safety of the battery can be improved.

The first sealing member 500 may be fitted into the first groove 710. That is, the first sealing member 500 can be fitted and coupled by applying pressure to the first groove 710, which facilitates the assembly.

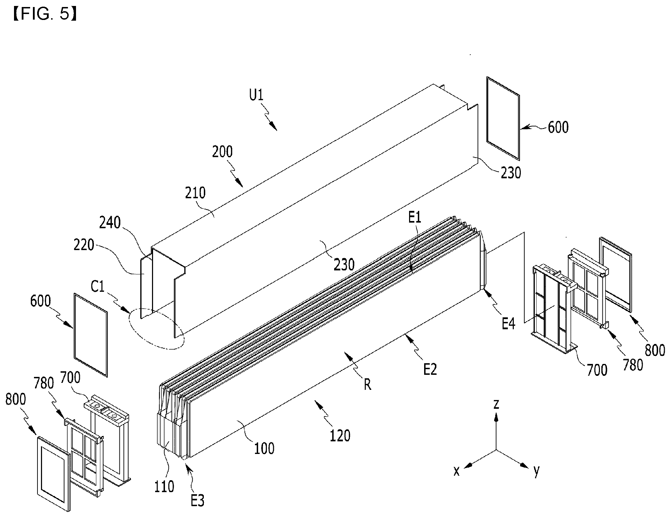

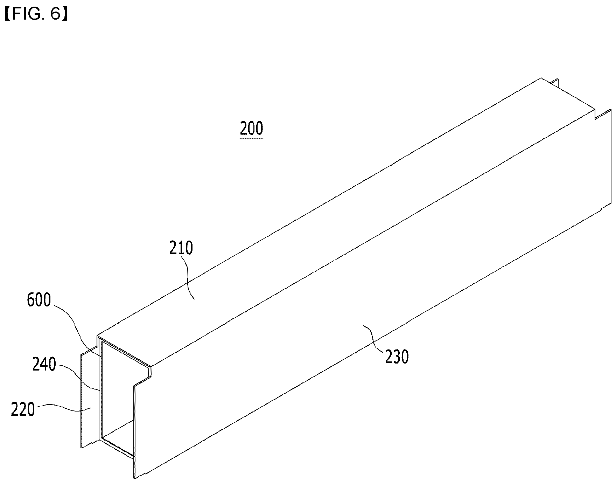

FIG. 5 is an exploded perspective view which schematically shows the configuration of a battery cell and a cell cover housed inside a battery pack according to another embodiment of the present disclosure. FIG. 6 is a diagram showing a sealing member mounted on a cell cover according to an embodiment of the present disclosure.

FIG. 5 is a modification of FIGS. 1 to 3, and descriptions of the same components as those described above are omitted.

Referring to FIGS. 5 and 6, a second sealing member 600 is mounted on both open sides of the cell cover 200 according to an embodiment of the present disclosure. The second sealing member 600 serves to improve the degree of sealing of the battery pack and prevent moisture or dust from entering the battery pack from the outside. Further, the second sealing member 600 allows the cell cover 200 and the busbar assembly 700 to be coupled without assembly tolerance, thereby preventing high-temperature gas or flame generated from the battery cell from being discharged to the outside.

The second sealing member 600 may be mounted on one region of the cell cover 200 where the busbar assembly 700 is mounted. The second sealing member 600 may be provided along inner surfaces of the upper side cover portion 210, the first side cover portion 220 and the second side cover portion 230 of the cell cover 200. The second sealing member 600 may be provided in the second groove 240 dug at a prescribed depth along the inner surface of the upper side cover portion 210, the first side cover portion 220 and the second side cover portion 230. The second sealing member 600 is a dispensing type, and may be formed by applying along the second grooves 240 formed on inner surfaces of the upper side cover portion 210, the first side cover portion 220, and the second side cover portion 230 and curing them.

The shape of the second sealing member 600 may correspond to the shape of the second groove 240. The width of the second sealing member 600 may be smaller than the thickness of the second groove 240 or may correspond to the thickness of the second groove 240. The height of the second sealing member 600 may correspond to the height of the second groove 240.

The second sealing member 600 may be formed of a resin. For example, the second sealing member 600 may be formed of a resin or the like. For example, the second sealing member 600 may be formed of a Cured In Place Gasket (CIPG) material. The CIPG material may be a material that hardens like rubber and changes into a solid phase when a liquid material is applied and then cured. Since the CIPG material has high elastic restoring force, when pressure is applied to the second sealing member 600, the shape may change as the pressure is applied. Therefore, when the second groove 240 is coupled with other components constituting the battery pack, for example, the busbar assembly 700, as the shape of the second sealing member 600 changes, it may play a role of filling the gap between the elements constituting the battery pack. That is, it is possible to prevent moisture or dust from entering into the battery pack from the outside, thereby improving the waterproof and dustproof performance of the battery pack. Further, when high-temperature gas or flame is generated in the battery cell due to charging and discharging of the battery, they can be prevented from being discharged into the gap between the cell cover 200 and the bus bar assembly 700, thereby controlling the venting direction and improving the safety of the battery.

Further, although the second sealing member 600 is shown as being provided along the second groove 240 in this figure, this is only one example and is not limited thereto.

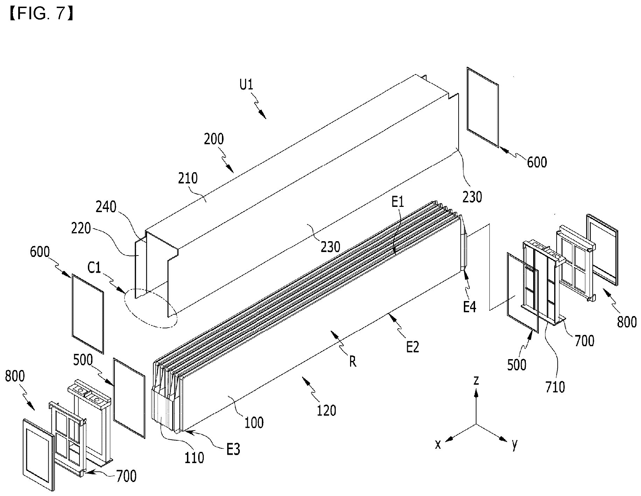

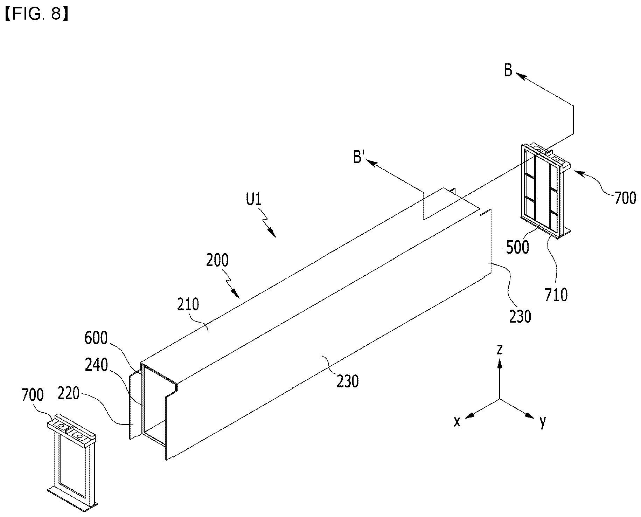

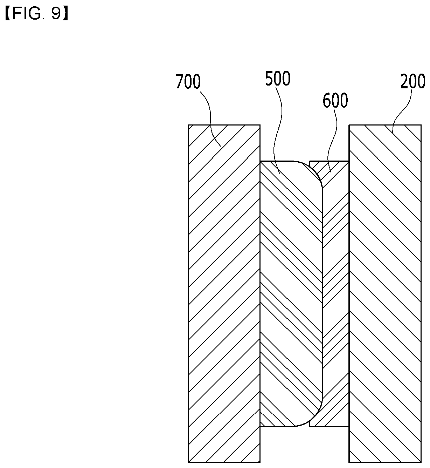

FIG. 7 is an exploded perspective view which schematically shows the configuration of a battery cell and a cell cover housed inside a battery pack according to yet another embodiment of the present disclosure. FIG. 8 is an exploded perspective view showing a configuration in which sealing members are respectively coupled to the cell cover and the busbar assembly of FIG. 7. FIG. 9 is a cross-sectional view taken along B-B' when the cell cover and the busbar assembly of FIG. 8 are coupled with each other.

Referring to FIGS. 7 and 8, the first sealing member 500 may be mounted on the busbar assembly 700 according to another embodiment of the present disclosure, and the second sealing member 600 may be mounted on both open sides of the cell cover 200. FIG. 9 is a cross-sectional view taken along B-B' when the cell cover and the busbar assembly of FIG. 8 are coupled with each other.

The contents described in FIGS. 7 to 9 are modifications of one embodiment of the present disclosure disclosed in FIGS. 2 and 5, and detailed descriptions of the same configuration as those described above are be omitted.

Specifically, the cell cover 200 according to another embodiment of the present disclosure may be applied to both the first sealing member 500 and the second sealing member 600.

Referring to FIGS. 7 to 9, one edge of the cell cover 200 and the busbar assembly 700 according to another embodiment of the present disclosure may be located while contacting each other. In this case, the first sealing member 500 provided along the first groove 710 of the busbar assembly 700 and the second sealing member 600 provided along the second groove 240 of the cell cover 200 may be located while contacting with each other.

The first sealing member 500 may have hardness larger than the second sealing member 600. Therefore, when the busbar assembly 700 is coupled to the cell cover 200, pressure is applied to the first sealing member 500 and the second sealing member 600, respectively. In this case, the first sealing member 500 may have a smaller shape change degree than in the second sealing member 600. Therefore, the first sealing member 500 and the second sealing member 600 may be coupled while being meshed without an assembly tolerance.

Referring to this, unlike conventional battery packs, there is no assembly tolerance between components to be assembled, and thus, it is less likely that moisture or dust will enter the battery pack from the outside. That is, it is possible to improve the waterproof and dustproof performance of the battery pack without being affected by the assembly conditions. Further, since each component is assembled more firmly without assembly tolerance, high-temperature gas or flame may be less likely to be discharged through gaps between the components. That is, gas or flame is not indiscriminately discharged, but venting can be made in a direction intended by the user, thereby improving the safety of the battery.

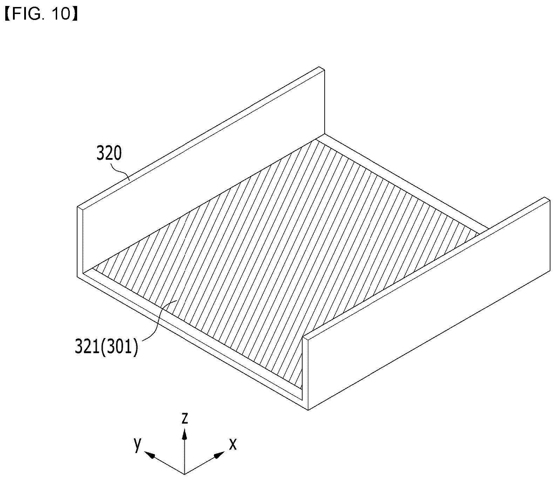

FIGS. 10 to 12 are partial perspective views which schematically show a partial configuration of a battery pack according to an embodiment of the present disclosure.

Referring to FIG. 4, a first sealing member 500 may be mounted on the bus bar assembly 700 according to an embodiment of the present disclosure.

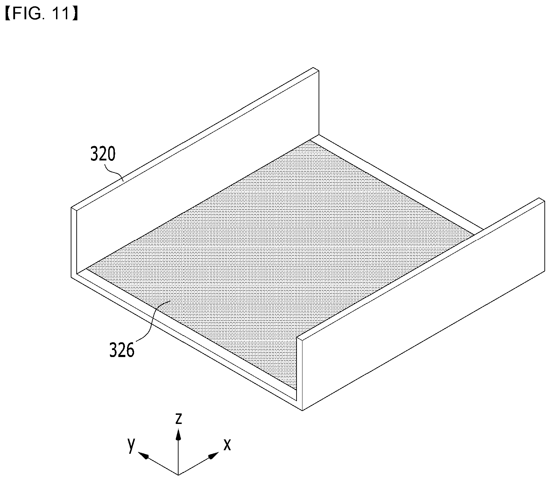

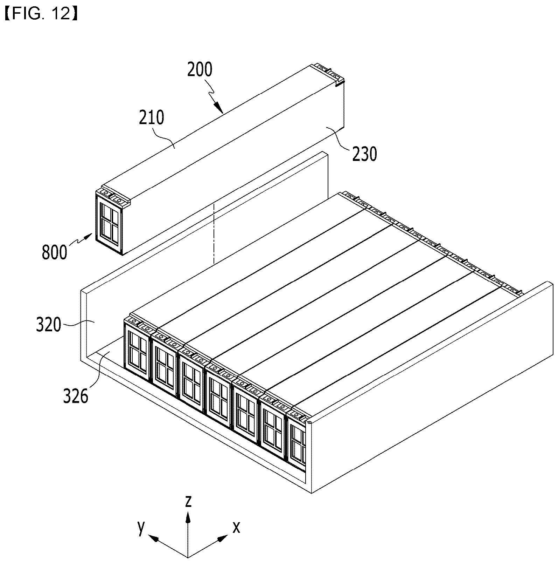

More specifically, FIG. 10 is a diagram showing a configuration in which a heat sink 301 is provided in a lower case 320 of a battery pack, FIG. 11 is a diagram showing a configuration in which a thermal resin 326 is applied to the heat sink 301 of FIG. 8. Further, FIG. 12 is a perspective view which schematically shows a configuration in which a plurality of cell units of FIG. 2 are stacked in the inner space of the lower case 320 of FIG. 10.

First, referring to FIG. 10, the pack case 300 may include a heat sink 301. Further, the plurality of battery cells 100 to which the cell cover 200 is coupled may be thermally coupled to the heat sink 301. For example, as shown in FIG. 10, a lower heat sink 321 may be provided in a lower case 320 of the pack case 300. Further, as shown in FIG. 12, the plurality of cell units may be directly seated on the upper surface of the lower heat sink 321. In particular, the cell cover 200 and the battery cell 100 provided in each cell unit may be configured such that their lower ends seat in direct contact with the upper portion of the lower heat sink 321 in the state of being erected in the vertical direction (z-axis direction and -z-axis direction).

In such embodiments, a thermal resin may be interposed between the heat sink 301 and the plurality of battery cells 100. For example, referring to FIG. 11, a thermal resin 326 may be applied to an upper surface of the lower heat sink 321. Further, as shown in FIG. 12, a plurality of cell units, that is, a plurality of battery cells 100 and a plurality of cell covers 200, can be seated on the upper surface of the lower heat sink 321 to which the thermal resin 326 is applied.

Here, the thermal resin 326 may be made of a material that conducts heat and has adhesive properties. The thermal resin 326 may transfer heat to the heat sink 301 so that heat generated in the battery cell 100 is dissipated through the heat sink 301. In addition, since the thermal resin 326 has an adhesive property, the cell cover 200 and/or the battery cell 100 may be mechanically coupled to the heat sink 301.

In such embodiment, the plurality of battery cells 100 to which the cell cover 200 is coupled may be directly seated on the upper surface of the lower heat sink 321 to which the thermal resin 326 is applied, as shown in FIG. 12. In this case, the plurality of cell units may be stably coupled and fixed to the upper surface of the lower heat sink 321 by the thermal resin 326. In particular, the battery cell 100 and the cell cover 200 included in each cell unit U2 may be formed such that the length in the upper and lower direction (z-axis direction and -z-axis direction) is longer than the width in the left-right direction (y-axis direction and - y-axis direction). Therefore, the battery cell 100 and the cell cover 200 may be seated on the upper surface of the lower heat sink 321 in an erected state, that is, in an upright state. At this time, the thermal resin 326 may allow the battery cell 100 and the cell cover 200 to be more stably maintained in an erected state.

Meanwhile, although not specifically mentioned above, the battery pack according to an embodiment of the present disclosure may further include a battery management system (BMS) and/or a cooling device that control and manage battery's temperature, voltage, etc.

The battery pack according to an embodiment of the present disclosure can be applied to various devices. For example, a device to which a battery pack is applied may be vehicle means such as an electric bike, an electric vehicle, and a hybrid electric vehicle. However, the above-mentioned device is not limited thereto, and the battery pack according to the present embodiment can be used in various devices other than the above-mentioned examples, which also falls under the scope of the present disclosure.

Although the invention has been described in detail above with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

**[Description of Reference Numerals]**

| | | | |
|---|---|---|---|
| 10: | battery pack | 100: | battery cell |
| 200: | cell cover | 210: | upper side cover portion |
| 220: | first side cover portion | 230: | second side cover portion |
| 240: | second groove | 300: | pack case |
| 301: | heat sink | 310: | upper case |
| 320: | lower case | 326: | thermal resin |
| 500: | first sealing member | 600: | second sealing member |
| 700: | busbar assembly | 710: | first groove |
| 780: | insulating cover portion | 800: | end cover |

## Claims

1. A battery pack comprising:
a plurality of battery cells stacked in one direction;
a pack case that houses the battery cells in an inner space thereof;
a cell cover that at least partially surrounds at least a part of the plurality of battery cells in the inner space of the pack case;
a busbar assembly that electrically connects the plurality of battery cells; and
a first sealing member mounted to the busbar assembly.

2. The battery pack of claim 1, wherein:
the busbar assembly comprises a first groove, which is a region dug at a prescribed depth along an edge thereof, and
the first sealing member is mounted in the first groove.

3. The battery pack of claim 2, wherein:
a width of the first sealing member is smaller than or equal to a width of the first groove, and
a height of the first sealing member is larger than or equal to a height of the first groove.

4. The battery pack of claim 1, wherein:
the first sealing member is formed of an elastic material.

5. The battery pack of claim 1, further comprising:
a second sealing member mounted to the cell cover.

6. The battery pack of claim 5, wherein:
the cell cover comprises,
an upper side cover portion that surrounds the upper portion of the battery cell;
a first side cover portion that extends in a lower direction from one end of the upper side cover portion, and
a second side cover portion that extends in a lower direction from the other end of the upper side cover portion, and
the second sealing member is provided along inner surfaces of the upper side cover portion, the first side cover portion, and the second side cover portion.

7. The battery pack of claim 6, wherein:
the second sealing member is provided in a second groove, which is a region dug at a prescribed depth along inner surfaces of the upper side cover portion, the first side cover portion, and the second side cover portion.

8. The battery pack of claim 7, wherein:
the second sealing member is formed by being applied along the second groove and then cured.

9. The battery pack of claim 5, wherein:
the second sealing member is formed of a resin.

10. The battery pack of claim 5, wherein:
the second sealing member is formed of a CIPG (Cured In Place Gasket) material.

11. The battery pack of claim 5, wherein:
the first sealing member and the second sealing member are disposed in contact with each other.

12. The battery pack of claim 5, wherein:
the first sealing member has a hardness greater than a hardness of the second sealing member.

13. The battery pack of claim 5, wherein:
the first sealing member has a shape change degree that is less than a shape changed degree of the second sealing member.

14. A battery pack comprising:
a plurality of battery cells stacked in one direction;
a pack case that houses the battery cells in an inner space thereof;
a cell cover that at least partially surrounds at least a part of the plurality of battery cells in the inner space of the pack case;
a busbar assembly that electrically connects the plurality of battery cells; and
a second sealing member mounted to the cell cover.

15. A device comprising the battery pack according to any one of claims 1 to 14.
